# EUROPÄISCHE PATENTSCHRIFT

(11) **EP 0 597 292 B1**
(45) Veröffentlichungstag und Bekanntmachung des Hinweises auf die Patenterteilung: **13.01.1999**
(21) Anmeldenummer: 93117033.6
(22) Anmeldetag: 21.10.1993
(51) Int. Cl.: C09B 49/00, C09B 69/04, C09D 11/00, C09D 11/16

(54) **Wasserunlösliche Schwefelfarbstoffe, ihre Herstellung und Verwendung**
Waterinsoluble sulphar dyes, their preparation and use
Colorants au soufre insolubles dans l'eau, leur préparation et leur utilisation

(30) Priorität: 11.11.1992 DE 4237985
(43) Veröffentlichungstag der Anmeldung: 18.05.1994
(73) Patentinhaber: Clariant GmbH, 65929 Frankfurt am Main (DE)
(72) Erfinder: Bauer, Wolfgang, Dr., D-63477 Maintal (DE); Steckelberg, Willi, Dr., D-65719 Hofheim/Ts (DE); Ritter, Josef, Dr., D-65812 Bad Soden (DE); Mauelshagen, Wilhelm, D-65520 Bad Camberg (DE)

(56) Entgegenhaltungen:
- EP-A- 0 063 208
- EP-A- 0 274 216
- EP-A- 0 325 172
- GB-A- 2 254 856

## Beschreibung

Die vorliegende Erfindung betrifft wasserunlösliche Schwefelfarbstoffe, ein Verfahren zu ihrer Herstellung, ihre Verwendung als Farbmittel für Schreibtinten und Aufzeichnungsflüssigkeiten, als Ladungssteuermittel für elektrophotographische Toner und als Infrarot-Absorber, sowie eine Aufzeichnungsflüssigkeit.

Gegenstand der vorliegenden Erfindung sind wasserunlösliche Schwefelfarbstoffe der allgemeinen Formel I 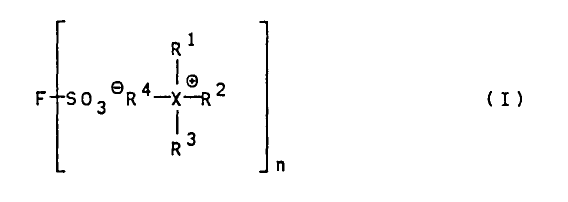 worin F den Farbstoffchromophor von C.I. Sulphur Black 1, Sulphur Black 2, Sulphur Black 5, Sulphur Black 6, Sulphur Black 7, Sulphur Black 10, Sulphur Black 11 oder Sulphur Black 12;
n 1 bis 6;
X Stickstoff oder Phosphor;
R¹, R², R³ und R⁴ unabhängig voneinander Wasserstoff, mit der Einschränkung, daß nicht alle gleichzeitig Wasserstoff sind,
(C₁-C₃₀)-Alkyl, (C₁-C₁₄)-Alkoxyethyl, (C₁-C₁₄)-Alkoxypropyl,
Oxethyl der allgemeinen Formel (CH₂-CH₂-O)ₘR⁵ wobei R⁵ Wasserstoff oder (C₁-C₄)-Alkyl und m 1 bis 5 bedeuten, (C₅-C₁₂)-Cycloalkyl,
gegebenenfalls durch (C₁-C₁₄)-Alkyl, (C₁-C₁₄)-Alkoxy, (C₁-C₁₄)-Alkoxycarbonyl oder Halogen einfach oder mehrfach substituiertes Phenyl oder Naphthyl,
(C₆-C₁₂)-Aryl-(C₁-C₆)-Alkyl bedeuten,
wobei die genannten Alkylreste noch durch Hydroxy, (C₁-C₄)-Alkoxy oder primäre, sekundäre oder tertiäre Aminogruppen substituiert sein können und wobei die Reste R¹ und R² zusammen mit X ein gegebenenfalls substituiertes oder noch weitere Heteroatome enthaltendes 5- oder 6-gliedriges Ringsystem bilden können.
Für R¹ bis R⁴ stehende Alkylgruppen können geradkettig oder verzweigt sein. Sie haben bevorzugt 1 bis 22 Kohlenstoffatome. Besonders bevorzugt sind Methyl, Ethyl, Propyl, Butyl, Pentyl, Hexyl, Octyl, Nonyl, Decyl, Dodecyl, Tetradecyl sowie Hexadecyl, wobei diese Reste jeweils auch verzweigt vorliegen können.

(C₅-C₁₂)-Cycloalkyl kann einkernig oder mehrkernig sein und bedeutet bevorzugt Cyclopentyl oder Cyclohexyl. (C₆-C₁₂)-Aryl-(C₁-C₆)alkyl bedeutet bevorzugt Benzyl. Halogen bedeutet bevorzugt Fluor, Chlor oder Brom.

Von den Resten R¹ und R² zusammen mit X gebildete Ringsysteme können aliphatisch oder aromatisch sein. Sie können als weitere Heteroatome Sauerstoff, Schwefel und/oder Stickstoff enthalten. Bevorzugte Ringsysteme sind das Pyridin- und das Piperidin-System.

Als für Substituenten der Alkylreste R¹ bis R⁴ stehende primäre, sekundäre oder tertiäre Aminogruppen sind bevorzugt N-Mono(C₁-C₄)alkylamino und N,N-Di(C₁-C₄)alkylamino.

Die erfindungsgemäßen Schwefelfarbstoffe der allgemeinen Formel I können einheitliche oder auch gemischte Kationen der genannten Art aufweisen.

F steht bevorzugt für den Farbstoffchromophor von C.I. Sulphur Black 1 oder Sulphur Black 11.

Die erfindungsgemäßen Farbstoffe der allgemeinen Formel I können dadurch hergestellt werden, daß man lösliche Schwefelfarbstoffe der allgemeinen Formel II 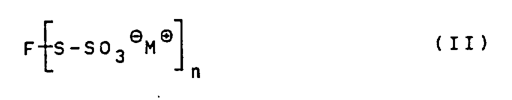 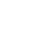 worin F und n wie oben angegeben definiert sind und M^{⊕} für ein Alkalikation, bevorzugt Na^{⊕}, steht mit einem Oxidationsmittel zu Farbstoffen der allgemeinen Formel III 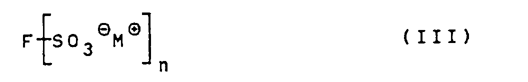 umsetzt und diese mit einem oder mehreren Salzen der allgemeinen Formel IV 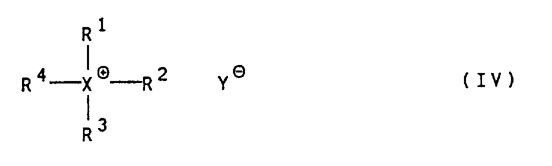 worin X und R¹ bis R⁴ wie oben angegeben definiert sind und Y^{⊖} das Anion einer schwachen oder starken Säure bedeutet, umsetzt.

Bevorzugt bedeutet Y^{⊖} Chlorid.

Alternativ können auch Schwefelfarbstoffe in Pigment-oder Leucoform mit Oxidationsmitteln in die Schwefelfarbstoff-Sulfonsäuren der allgemeinen Formel III übergeführt werden (s. beispielsweise Rev. Pure Appl.Chem. 12, 72 (1962)).

Die Oxidation von Schwefelfarbstoffen in Form der Bunte-Salze der allgemeinen Formel II (Solubilised Sulphur Dyes) oder von Schwefelfarbstoffen in Pigment- oder Leucoform kann beispielsweise mit folgenden Oxidationsmitteln durchgeführt werden: Chlor, Brom, Jod, Natriumhypochlorit, Natriumchlorit, Natriumbromat, Salpetersäure, Wasserstoffperoxid, Natriumperborat (s. beispielsweise K. Venkataraman, "The Chemistry of Synthetic Dyes", Vol. VII, S. 35 (1974); Rev. Pure Appl. Chem. 12, 72 (1962); EP 63 208).

Dabei kann es vorteilhaft sein, die eingesetzten Oxidationsmittel durch Metallionen zu aktivieren. Geeignete metallische Verbindungen sind beispielsweise: FeCl₂, FeCl₃, FeSO₄, Fe₂(SO₄)₃, K₃Fe(CN)₆, K₂Fe(CN)₆, CuCl₂, CuSO₄, Na₃VO₄, V₂O₅, Na₂WO₄, Na₂MoO₄, OsO₄ und SeO₂.

Bevorzugte Oxidationsmittel bei der Herstellung der erfindungsgemäßen Farbstoffe der allgemeinen Formel I sind Wasserstoffperoxid, Natriumperborat und Natriumchlorit, die insbesondere im wäßrigen Medium bei pH-Werten von 7 bis 14 und Temperaturen von 20 bis 150°C eingesetzt werden.

Besonders bevorzugt ist die Oxidation mit H₂O₂ im wäßrigen Medium.

Die löslichen Schwefelfarbstoffe der allgemeinen Formel II sind bekannt.

C.I.Solubilised Sulfur Black 1 kann beispielsweise durch Alkalischmelze von 2,4-Dinitrochlorbenzol zu 2,4-Dinitrophenolat, Reaktion mit Natriumpolysulfid bei erhöhter Temperatur und anschließender Umsetzung mit Schwefeldioxid, Natriumhydrogensulfid oder Natriumsulfit hergestellt werden (vergl. z.B. Colour Index, Third Edition, Volume 4 (1971), S. 4476, 4485 und dort zitierte Literatur; K. Venkataraman, "The Chemistry of Synthetic Dyes", Vol. VII, S. 1, S. 35 (1974); H.E.Fierz - David u. L. Blangey, "Grundlegende Operationen der Farbenchemie", 8. Auflage, S. 329, Springer Verlag, 1952).

Bei Schwefelfarbstoffen vom Typ C.I. Solubilised Sulfur Black 1 handelt es sich um ein Gemisch von Farbstoffen, wobei die Strukturen V und VI (K.Venkataraman, "The Chemistry of Synthetic Dyes", Volume II, S. 1090 (1952)) bzw. VII (F. Gordon u. P. Gregory, "Organic Chemistry in Color", S.16, Springer Verlag 1983) vorgeschlagen wurden. 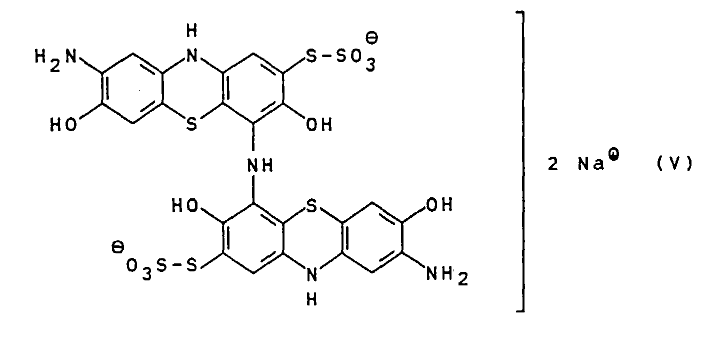 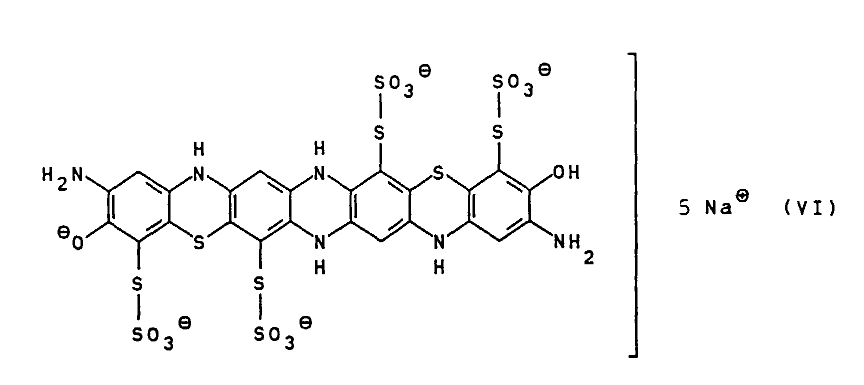 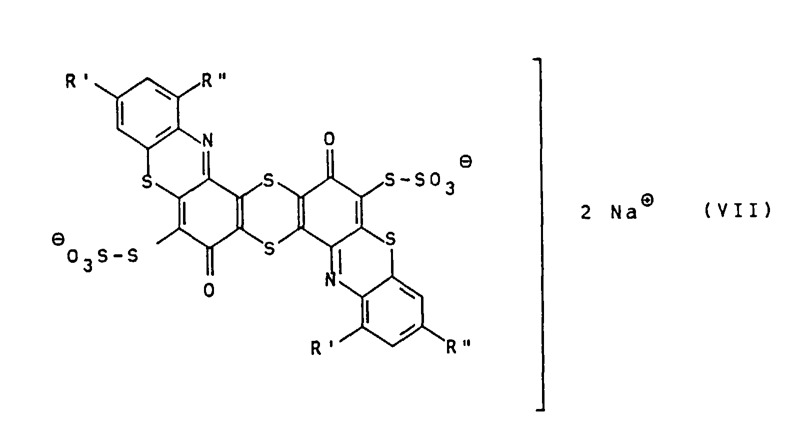 (R', R" = OH, NH₂)

Die eingesetzte Menge an Oxidationsmittel kann in weiten Grenzen variiert werden, beispielsweise von 2 Mol bis 8 Mol Wasserstoffperoxid pro Mol eingesetztes 2,4-Dinitrochlorbenzol oder 1 Mol bis 4 Mol Natriumchlorit pro Mol eingesetztes 2,4-Dinitrochlorbenzol.
Die Oxidationsprodukte der allgemeinen Formel III fallen normalerweise als Natriumsalze in wäßriger Lösung an, die noch herstellungsbedingt Salze wie Natriumchlorid, Natriumsulfat, Natriumsulfit oder Natriumthiosulfat enthalten. Zur Überführung in die erfindungsgemäßen wasserunlöslichen Schwefelfarbstoffe der allgemeinen Formel I werden die nach der Oxidation erhaltenen Lösungen mit Ammonium- oder Phosphoniumsalzen der allgemeinen Formel IV umgesetzt. Diese Umsetzungen erfolgen normalerweise im wäßrigen Reaktionsmedium bei pH-Werten von 2 bis 8, vorzugsweise 4 bis 7, und Temperaturen von 0 bis 100°C, vorzugsweise 10 bis 50°C. Die als wäßrige Suspension anfallenden wasserunlöslichen Schwefelfarbstoffe der allgemeinen Formel I werden darauf in üblicher Weise isoliert.

Diese Verfahrensweise stellt die bevorzugte Variante des erfindungsgemäßen Verfahrens dar. Alternativ ist es auch möglich, die erfindungsgemäßen Farbstoffe der allgemeinen Formel I aus den zunächst erhaltenen wäßrigen Lösungen der Oxidationsprodukte der allgemeinen Formel III durch Einstellen von pH-Werten von 0 bis 2 in Form der Farbstoffsäure der allgemeinen Formel IIIa 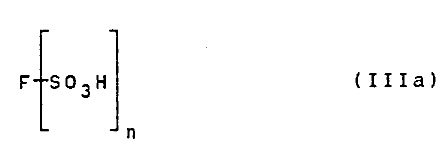 zu isolieren. Die pH-Einstellung wird hierbei in üblicher Weise mit einer Mineralsäure wie Salzsäure, Schwefelsäure oder Phosphorsäure vorgenommen.

Durch anschließende Neutralisation der Farbstoffsäuren der allgemeinen Formel IIIa mit Aminen der allgemeinen Formel VIII 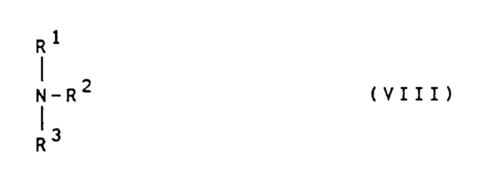 worin R¹ bis R³ wie oben angegeben definiert sind, können dann erfindungsgemäße Farbstoffe der allgemeinen Formel I mit R⁴ = Wasserstoff und X = Stickstoff erhalten werden.

Geeignete Amine der allgemeinen Formel VIII, die in protonierter Form oder in Form der freien Base wie oben beschrieben zur Herstellung der erfindungsgemäßen Farbstoffe der allgemeinen Formel I herangezogen werden können, sind beispielsweise:
n-Hexylamin, Heptylamin, Isoheptylamin, n-Octylamin, iso-Octylamin, tert.-Octylamin, 2-Ethyl-hexylamin, 2,4,4-Trimethyl-2-pentylamin, 1,5-Dimethyl-hexylamin, 1-Methyl-heptylamin, Nonylamin, Isononylamin, 3,5,5-Trimethyl-hexylamin, Decylamin, Dodecylamin, Hexadecylamin, Stearylamin, Cocosfettamin, Oleylamin, 2-Ethylhexoxy-propylamin, Isononoxy-propylamin, Di-n-Butylamin, Di-2-ethylhexyl-amin, Di-isononylamin, Distearylamin, Dicyclohexylamin, Di-isopropyl-ethylamin, Tri-n-butylamin, Tri-isooctylamin, Dimethylcocosfettamin, Dimethyldodecylamin, Tribenzylamin, Dodecylamino-bis-ethanol, Bis-hydroxyethyl-cocosfettamin, Bis-hydroxyethoxyethyl-cocosfettamin, Tris(3,6-dioxaheptyl)amin, 4-Dodecylanilin, 2,5-Dimethylanilin, 4-Chlor-2,5-dimethylanilin, Phenyl-butylamin, 4-Dodecylpyridin oder 1-Naphthylamin.

Quartäre Ammonium- und Phosphoniumsalze der allgemeine Formel IV, die sich zur Herstellung der erfindungsgemäßen wasserunlöslichen Schwefelfarbstoffe der allgemeinen Formel I eignen, sind beispielsweise:
Tetrapropylammoniumbromid, Tetrabutylammoniumbromid, Benzyltributylammoniumchlorid, Benzyltriethylammoniumchlorid, Benzyldimethylhexadecylammoniumchlorid, 3-Benzyl-5-(2-hydroxyethyl)-4-methyl-thiazoliumchlorid, Hexadecylpyridiniumchlorid, Methyl-trioctylammoniumchlorid, Methyl-tridecylammoniumchlorid, Dimethyl-dioctylammoniumchlorid, Dimethyl-di-decylammoniumchlorid, Dimethyl-di-hexadecylammoniumchlorid, Trimethyl-dodecylammoniumchlorid, Trimethyl-hexadecylammoniumchlorid, Trimethyl-octadecylammoniumchlorid, Tetrabutylphosphoniumacetat, Tributyl-hexadecylphosphoniumbromid, Benzyl-dodecyl-bis(hydroxyethyl)-ammoniumchlorid, Tetraoctylammoniumchlorid.

Die erfindungsgemäßen wasserunlöslichen Farbstoffe der allgemeinen Formel I sind z.B. als Farbmittel für lösungsmittelhaltige Tinten, Schreibtinten und Aufzeichnungsflüssigkeiten, insbesondere für das Tintenstrahl- oder Ink-Jet-Druckverfahren, sowie für das Hot-Melt-Druckverfahren, als Infrarot-Absorber, sowie als Farbmittel und Ladungssteuerungsmittel für elektrophotographische Toner geeignet.

Die Löslichkeit der erfindungsgemäßen wasserunlöslichen Schwefelfarbstoffe der allgemeinen Formel I in organischen Lösungsmitteln ist abhängig von der Kettenlänge und dem Verzweigungsgrad der Substituenten R¹ bis R⁴.

In Alkoholen oder Methylethylketon lösliche Farbstoffe der allgemeinen Formel I erhält man mit Resten R¹ bis R⁴, die insgesamt 6 bis 14 Kohlenstoffatome aufweisen und insbesondere verzweigt sind. Derartige in organischen Lösungsmitteln lösliche erfindungsgemäße Schwefelfarbstoffe der allgemeinen Formel I weisen eine exzellente Lichtechtheit und Wasserechtheit auf und sind hervorragend zur Herstellung von Tinten für industrielle Ink-Jet-Druckverfahren, z.B. zur Codierung, Markierung und Adressierung, geeignet.

Das Tintenstrahl- oder Ink-Jet-Druckverfahren und die Anforderungen an die hierbei verwendeten Tinten und Aufzeichnungsflüssigkeiten sind z.B. beschrieben in: Kirk-Othmer, Encyclopedia of Chemical Technology, 3rd Edt., Vol.20 (1982), 153-156, und in Ullmann's Encyclopedia of Industrial Chemistry, 5th Edt., Vol. A 13 (1989), 588-594. In Ullmann's loc.cit. 595 sowie in Gregory: High Technology Application of Organic Colorants, Plenum Press (1991), 182, sind auch die Anforderungen an Hot-Melt-Inks beschrieben.

Die mit den erfindungsgemäßen Farbstoffen der allgemeinen Formel I herstellbaren Tinten und Aufzeichnungsflüssigkeiten für das Ink-Jet-Verfahren besitzen eine hervorragende Lagerstabilität auch in konzentrierter Form und ausgezeichnete Druckeigenschaften, insbesondere ein gutes Ansprech- und Ausstoßverhalten, gute Tröpfchenbildung und hervorragende Bildeigenschaften, insbesondere hinsichtlich Dichte, Farbton, Kontrast, Wasser-, Licht- und Wetterechtheit.

Eine Tinte für das Tintenstrahldruckverfahren bzw. für das Ink-Jet-Druckverfahren besteht aus einer Lösung eines oder mehrerer Farbstoffe der allgemeinen Formel I in einem geeigneten organischen Lösungsmittel oder Lösungsmittelgemisch, insbesondere in Ethanol und/oder Methylethylketon. Andere Lösungsmittel sind z.B. Methanol, Propanol, Isopropanol, Butanol, sec.Butanol; Amide, wie z.B. Dimethylformamid und Dimethylacetamid; Ketone oder Ketonalkohole, wie z.B. Aceton oder Diacetonalkohol; ferner Glykole und Glykolether, wie z.B. Ethylenglykol, Diethylenglykol, Triethylenglykol, Diethylenglykolmonoethylether.

Als nichtflüchtige Vehikel können auch Fettsäuren und/oder Fettsäureester und/oder Sulfonamide verwendet werden. Die Tinte kann auch noch einen oder mehrere andere Farbstoffe und/oder ein oder mehrere Hilfsmittel, wie z.B. Biocide, Leitsalze oder Mittel zur Einstellung des elektrischen Widerstands, wie z.B. Lithiumchlorid, Natriumchlorid, Natriumsulfat, Ammoniumchlorid, Korrosionsinhibitoren, Verdicker oder Mittel zur Beeinflussung der Viskosität etc. enthalten.

Die Menge der erfindungsgemäßen Farbstoffe der allgemeinen Formel I in der Tinte oder Aufzeichnungsflüssigkeit richtet sich nach der gewünschten optischen Dichte des Bildes. In der Regel enthält die Tinte 0,5 bis 20 Gew.%, vorzugsweise 0,5 bis 15 Gew.%, eines oder mehrerer Schwefelfarbstoffe der allgemeinen Formel I. Die Tinte oder Aufzeichnungsflüssigkeit enthält z.B. 99,5 bis 80, vorzugsweise 99,5 bis 85 Gew.% eines oder mehrerer organischer Lösungsmittel.

Zur Herstellung der Tinten oder Aufzeichnungsflüssigkeiten kann ein erfindungsgemäßer Farbstoff der allgemeinen Formel I in einem organischen Lösungsmittel, vorzugsweise in Ethanol und/oder Methyl-ethyl-keton, oder in einem Gemisch organischer Lösungsmittel gelöst und evtl. anschließend mit den anderen Komponenten, Hilfsmitteln etc. versetzt und dann filtriert werden.

### Beispiel 1

932 g einer in bekannter Weise aus 202,6 g 2,4-Dinitrochlorbenzol hergestellten Lösung von C.I.Solubilised Sulphur Black 1 werden mit 1 l Wasser versetzt und bei 40^{o}C mit 398 g einer 35%igen wäßrigen Wasserstoffperoxidlösung oxidiert. Anschließend rührt man 3 Stunden bei 40^{o}C nach, wobei der pH-Wert der wäßrigen Lösung mit 84 ml 10 N Natronlauge bei 7 - 7,5 gehalten wird. Nach der Oxidation stellt man mit 30 ml 5 molarer Schwefelsäure auf pH 5,8 und versetzt die Farbstofflösung bei 25-30^{o}C mit 650 ml einer 2-molaren wäßrigen 2-Ethylhexylammoniumchlorid-Lösung. Man rührt die erhaltene Farbstoffsuspension 1 Stunde bei 30^{o}C nach, filtriert und wäscht den Filterkuchen mit 3 l Wasser elektrolytfrei.
Ausbeute: 416,6 g schwarzes Pulver
Absorptionsspektrum in Ethanol: λₘₐₓ = 580 nm.

Der Farbstoff eignet sich hervorragend zur Herstellung von Tinten unter Verwendung von Alkoholen wie Ethanol oder Isopropanol bzw. von Methylethylketon für das Ink-Jet-Druckverfahren, wobei Drucke mit exzellenter Licht- und Wasserechtheit erhalten werden.

### Beispiel 2

Die in Beispiel 1 beschriebene Oxidation wird mit 307,6 g statt 398,0 g einer 35%igen wäßrigen Wasserstoffperoxidlösung durchgeführt.
Ausbeute: 408,2 g schwarzes Pulver
Absorptionsspektrum in Ethanol: λₘₐₓ = 580 nm.

### Beispiel 3

Das in Beispiel 1 wiedergegebene Verfahren wird wiederholt, wobei
anstelle 398 g 35%iges Wasserstoffperoxid 498,3 g 35%iges Wasserstoffperoxid eingesetzt werden.
Ausbeute: 413,8 g schwarzes Pulver
Absorptionsspektrum in Ethanol: λₘₐₓ = 580 nm.

### Beispiel 4

444,0 g C.I.Solubilised Sulphur Black 1 in Pulverform, das in bekannter Weise aus 202,6 g 2,4-Dinitrochlorbenzol hergestellt wurde, werden in 3,0 l Wasser gelöst und bei 45^{o}C mit einer Lösung von 45,2 g Natriumchlorit in 400 ml Wasser versetzt. Man rührt 4 Stunden bei 45^{o}C und einem pH-Wert von 10,2 nach und versetzt die mit 10 N Salzsäure auf pH 5 gestellte Mischung anschließend mit 616 ml einer 2-molaren wäßrigen 2-Ethylhexyl-ammoniumchlorid-Lösung.
Der ausgefallene Farbstoff wird anschließend isoliert und mit Wasser salzfrei gewaschen.
Ausbeute: 390,7 g schwarzes Pulver
Absorptionsspektrum in Ethanol: λₘₐₓ = 580 nm.

### Beispiel 5

193,6 g C.I.Sulphur Black 1, Pulver, das in üblicher Weise aus 202,6 g 2,4-Dinitrochlorbenzol hergestellt wurde, werden in 1,4 l Wasser suspendiert und bei 50^{o}C mit 291,6 g einer 35%igen wäßrigen Wasserstoffperoxidlösung versetzt, wobei der pH-Wert durch gleichzeitige Zugabe von 182 ml 10 N Natronlauge bei pH 7,5 bis 9 gehalten wird. Man rührt 2 Stunden bei 70^{o}C nach und stellt die schwarze Farbstofflösung zunächst mit 42 ml 10 N Salzsäure auf pH 6. Dann kühlt man auf 25^{o}C und gibt 168 ml einer 2-molaren wäßrigen 2-Ethylhexylammoniumchlorid-Lösung zu. Anschließend wird 2 Stunden bei 25^{o}C nachgerührt, filtriert und der Filterkuchen mit 3 l Wasser salzfrei gewaschen.
Ausbeute: 425,1 g schwarzes Pulver
Absorptionsspektrum in Ethanol: λₘₐₓ = 580 nm.

### Beispiel 6

71 g des nach Beispiel 1 erhaltenen Farbstoffs werden in 930 g 96%igen Ethanol eingetragen und bei 70 - 75^{o}C gelöst. Man filtriert von geringen Mengen eines unlöslichen Rückstands ab und erhält 1000 g einer 7%igen schwarzen Tinte mit hoher Lagerstabilität, die sich hervorragend für das Ink-Jet-Verfahren eignet. Die erhaltenen schwarzen Drucke weisen eine exzellente Licht- und Wasserechtheit auf.

Die nachfolgenden Beispiele 7 bis 30 betreffen weitere erfindungsgemäße Farbstoffe der allgemeinen Formel I, die nach den Angaben des Beispiels 1 aus C.I.Solubilised Sulphur Black 1 und den jeweils angegebenen Verbindungen der allgemeinen Formel IV erhalten werden können.

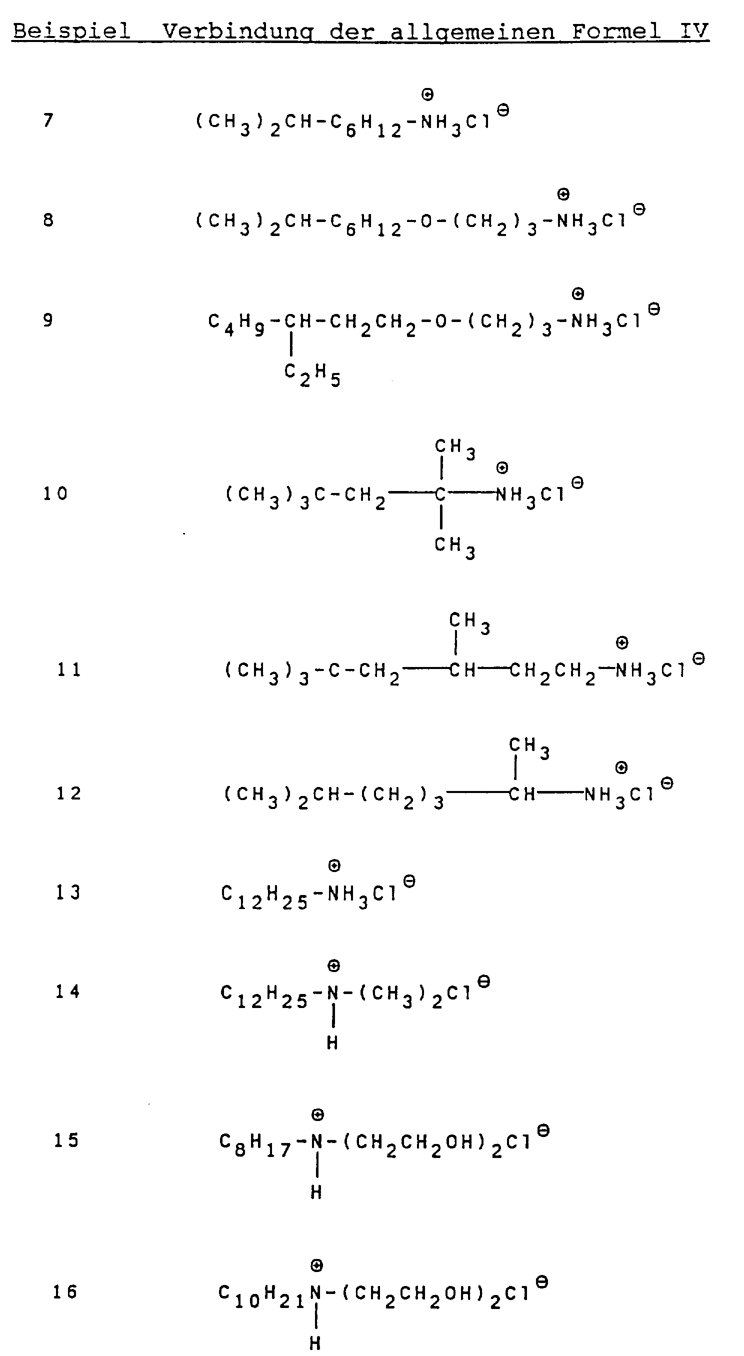

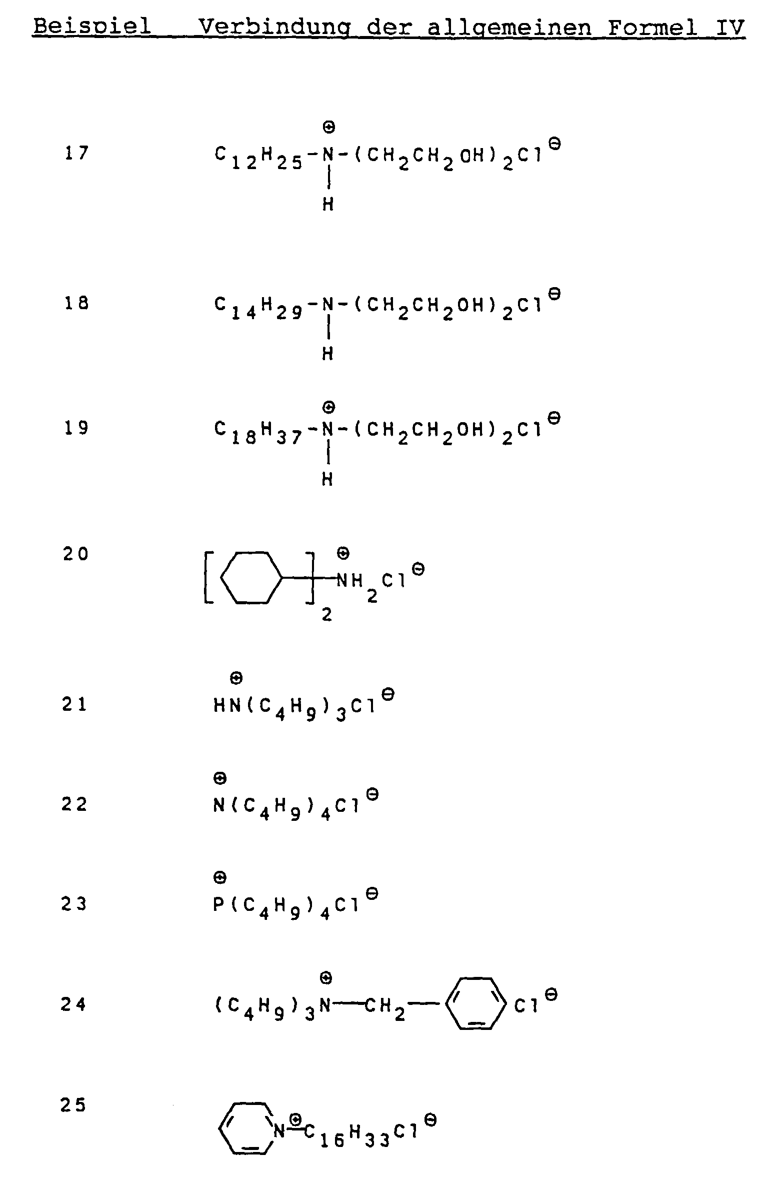

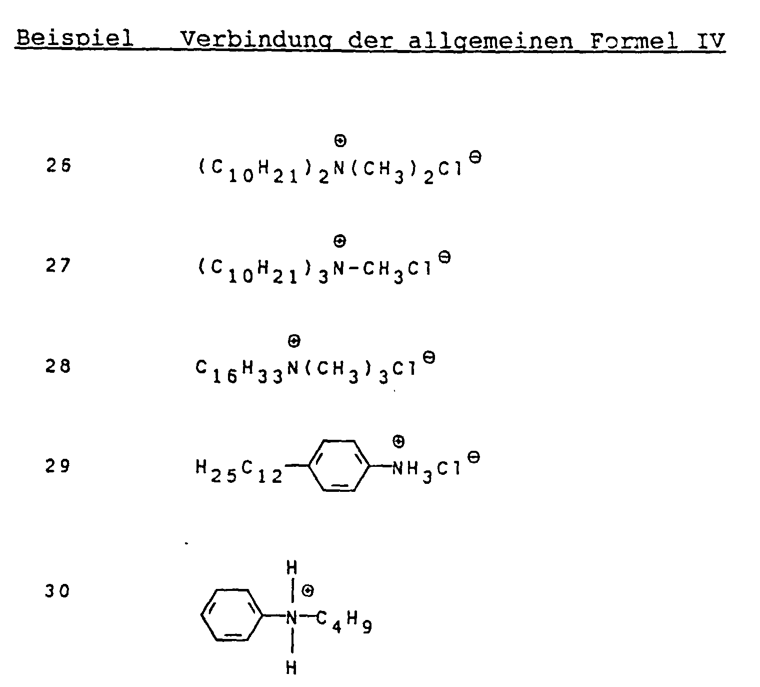

Die nachfolgenden Beispiele 31 bis 34 betreffen weitere erfindungsgemäße Farbstoffe der allgemeinen Formel I, die nach den Angaben des Beispiels 1 aus dem jeweils angegebenen Farbstoff und der Verbindung der Formel 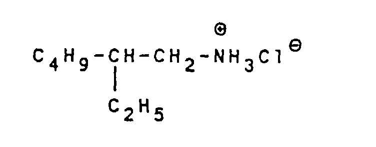 erhalten werden können.

### Beispiele

| | |
|---|---|
| 31 | C.I. Solubilized Sulphur Black 2 (C.I. 53196) |
| | |
| 32 | C.I. Solubilized Sulphur Black 5 (C.I. 53206) |
| | |
| 33 | C.I. Solubilized Sulphur Black 7 (C.I. 53301) |
| | |
| 34 | C.I. Solubilized Sulphur Black 11 (C.I. 53291) |

### Beispiel 35

Das Verfahren gemäß Beispiel 1 wird wiederholt, wobei der Lösung von C.I. Solubilised Sulphur Black 1 vor Zugabe der Wasserstoffperoxidlösung 2,0 g Natriumvanadat zugefügt wird.
Ausbeute: 421,2 g schwarzes Pulver
Absorptionsspektrum in Ethanol: λₘₐₓ = 582 nm

### Beispiel 36

Das Verfahren gemäß Beispiel 1 wird wiederholt, wobei der Lösung von C.I. Solubilised Sulphur Black 1 vor Zugabe der Wasserstoffperoxidlösung 3,0 g Natriumwolframat zugefügt wird.
Ausbeute: 425,1 g schwarzes Pulver
Absorptionsspektrum in Ethanol: λₘₐₓ = 582 nm

### Beispiel 37

Das Verfahren gemäß Beispiel 1 wird wiederholt, wobei anstelle 398 g einer 35%igen Wasserstoffperoxidlösung 498,3 g einer 35%igen Wasserstoffperoxidlösung eingesetzt wird und eine Reaktionstemperatur von 90^{o}C statt 40^{o}C eingehalten wird.
Ausbeute: 414,1 g schwarzes Pulver
Absorptionsspektrum in Ethanol: λₘₐₓ = 580 nm

### Beispiel 38

Das Verfahren gemäß Beispiel 1 wird wiederholt, wobei anstelle 398 g einer 35%igen Wasserstoffperoxidlösung 689,7 g einer 35%igen Wasserstoffperoxidlösung eingesetzt werden.
Ausbeute: 419,1 g schwarzes Pulver
Absorptionsspektrum in Ethanol: λₘₐₓ = 585 nm

## Patentansprüche

1. Wasserunlösliche Schwefelfarbstoffe der allgemeinen Formel I 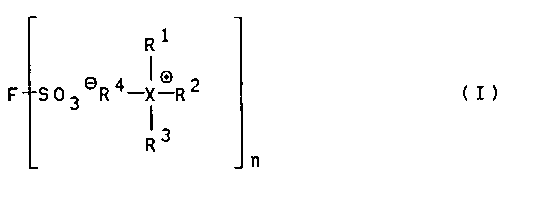 worin
F den Farbstoffchromophor von C.I. Sulphur Black 1, Sulphur Black 2, Sulphur Black 5, Sulphur Black 6, Sulphur Black 7, Sulphur Black 10, Sulphur Black 11 oder Sulfur Black 12,
n = 1 bis 6;
X Stickstoff oder Phosphor;
R¹, R², R³, R⁴ unabhängig voneinander Wasserstoff, mit der Einschränkung, daß nicht alle gleichzeitig Wasserstoff sind,
(C₁ - C₃₀)-Alkyl, (C₁-C₁₄)-Alkoxyethyl, (C₁-C₁₄)-Alkoxypropyl,
Oxethyl der allgemeinen Formel -(CH₂CH₂-O)ₘR⁵,
wobei R⁵ Wasserstoff oder (C₁-C₄)-Alkyl und m 1 bis 5 bedeuten,
(C₅ - C₁₂)-Cycloalkyl,
gegebenenfalls durch (C₁-C₁₄)-Alkyl, (C₁-C₁₄)-Alkoxy, (C₁-C₁₄)-Alkoxycarbonyl oder Halogen einfach oder mehrfach substituiertes Phenyl oder Naphthyl,
(C₆ - C₁₂)-Aryl-(C₁ -C₆)-Alkyl, wobei die genannten Reste noch durch Hydroxy, (C₁ - C₄)-Alkoxy oder primäre, sekundäre oder tertiäre Aminogruppen substituiert sein können und wobei die Reste R¹ und R² zusammen mit X ein gegebenenfalls substituiertes oder noch weitere Heteroatome enthaltendes 5- oder 6-gliedriges Ringsystem bilden können.

2. Wasserunlösliche Schwefelfarbstoffe gemäß Anspruch 1, dadurch gekennzeichnet, daß F für den Farbstoffchromophor von C.I. Sulphur Black 1 oder Sulphur Black 11 steht.

3. Verfahren zur Herstellung wasserunlöslicher Schwefelfarbstoffe der Ansprüche 1 bis 2, dadurch gekennzeichnet, daß Schwefelfarbstoffe der allgemeinen Formel II 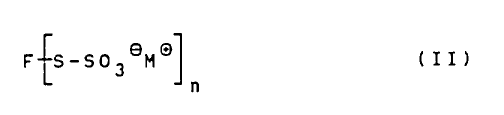 worin F und n wie in Anspruch 1 angegeben definiert sind und M^{⊕} für ein Alkalikation, bevorzugt Na^{⊕} steht, mit einem Oxidationsmittel zu Farbstoffen der allgemeinen Formel III 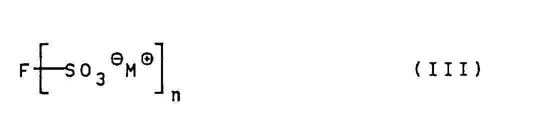 umgesetzt und diese mit einem oder mehreren Salzen der allgemeinen Formel IV 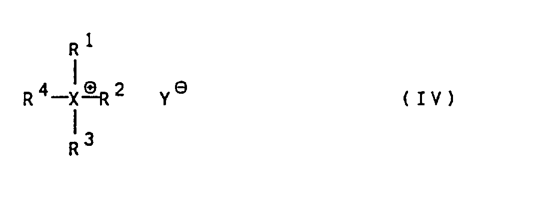 worin X und R¹ bis R⁴ wie in Anspruch 1 angegeben definiert sind und Y^{^{⊖}} das Anion einer schwachen oder starken Säure bedeutet, umgesetzt werden.

4. Verfahren gemäß Anspruch 3, dadurch gekennzeichnet, daß der Schwefelfarbstoff in seiner Pigment- oder Leucoform oxidiert wird.

5. Verfahren gemäß Anspruch 3 und/oder 4, dadurch gekennzeichnet, daß als Oxidationsmittel Wasserstoffperoxid, Natriumperborat, Chlor, Brom, Jod, Natriumhypochlorit, Natriumchlorit, Natriumbromat oder Salpetersäure eingesetzt werden.

6. Verfahren gemäß einem oder mehreren der Ansprüche 3 bis 5, dadurch gekennzeichnet, daß die Oxidation mit Wasserstoffperoxid durchgeführt wird.

7. Verfahren gemäß einem oder mehreren der Ansprüche 3 bis 6, dadurch gekennzeichnet, daß die Oxidation in Gegenwart von Metallionen ausgeführt wird.

8. Verwendung der wasserunlöslichen Schwefelfarbstoffe der allgemeinen Formel I der Ansprüche 1 und/oder 2 als Infrarot-Absorber, als Farbmittel oder Ladungssteuerungsmittel für elektrophotographische Toner, sowie zur Herstellung von Tinten und Aufzeichnungsflüssikeiten, insbesondere für Tintenstrahl- oder Ink-Jet-Verfahren, sowie für das Hot-Melt-Druckverfahren.

9. Aufzeichnungsflüssigkeit, insbesondere für das Tintenstrahl- oder Ink-Jet-Druckverfahren, enthaltend in einer organischen Lösung einen Schwefelfarbstoff der allgemeinen Formel I der Ansprüche 1 und/oder 2.

10. Aufzeichnungsflüssigkeit nach Anspruch 9, dadurch gekennzeichnet, daß sie 0,5 bis 20 Gew.%, vorzugsweise 0,5 bis 15 Gew.%, eines Schwefelfarbstoffs der allgemeinen Formel I enthält.

11. Aufzeichnungsflüssigkeit nach Anspruch 9 und/oder 10, dadurch gekennzeichnet, daß sie 99,5 bis 80, vorzugsweise 99,5 bis 85 Gew.% eines organischen Lösungsmittels oder Lösungsmittelgemisches enthält.

## Claims

1. Water-insoluble sulphur dyes of the general formula I 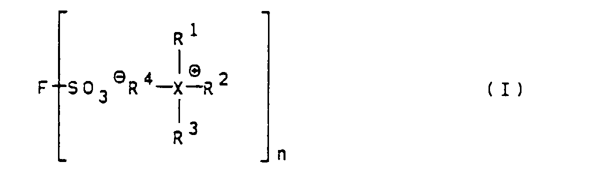 in which
F is the dye chromophore of C.I. Sulphur Black 1, Sulphur Black 2, Sulphur Black 5, Sulphur Black 6, Sulphur Black 7, Sulphur Black 10, Sulphur Black 11 or Sulphur Black 12,
n is 1 to 6;
X is nitrogen or phosphorus;
R¹, R², R³ and R⁴, independently of one another, are hydrogen, with the restriction that not all are simultaneously hydrogen,
(C₁-C₃₀)-alkyl, (C₁-C₁₄)-alkoxyethyl, (C₁-C₁₄)-alkoxypropyl,
oxyethyl of the general formula -(CH₂CH₂-O)ₘR⁵,
R⁵ being hydrogen or (C₁-C₄)-alkyl and m being 1 to 5,
(C₅-C₁₂)-cycloalkyl,
phenyl or naphthyl, each of which is unsubstituted or mono- or polysubstituted by (C₁-C₁₄)-alkyl, (C₁-C₁₄)-alkoxy (C₁-C₁₄)-alkoxycarbonyl or halogen, (C₆-C₁₂)-aryl-(C₁-C₆)-alkyl, it being possible for the radicals mentioned to be additionally substituted by hydroxyl, (C₁-C₄)-alkoxy or primary, secondary or tertiary amino groups and for the radicals R¹ and R² together with X to form a 5- or 6-membered ring system which is substituted or unsubstituted or contains further heteroatoms.

2. Water-insoluble sulphur dyes according to Claim 1, characterized in that F represents the dye chromophore of C.I. Sulphur Black 1 or Sulphur Black 11.

3. Process for preparing water-insoluble sulphur dyes of Claims 1 to 2, characterized in that sulphur dyes of the general formula II 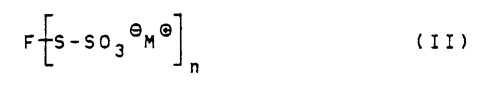 in which F and n are defined as stated in Claim 1 and M^{⊕} represents an alkali metal cation, preferably Na^{⊕}, are reacted with an oxidizing agent to give dyes of the general formula III 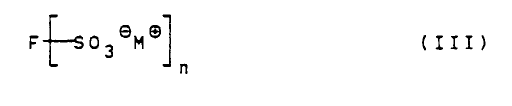 and these dyes are reacted with one or more salts of the general formula IV 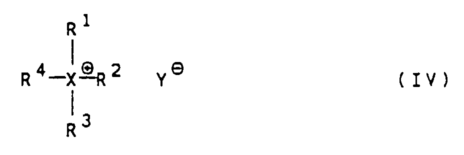 in which X and R¹ to R⁴ are defined as stated in Claim 1 and Y^{^{⊖}} is the anion of a weak or strong acid.

4. Process according to Claim 3, characterized in that the sulphur dye is oxidized in its pigment or leuco form.

5. Process according to Claim 3 and/or 4, characterized in that the oxidizing agent used is hydrogen peroxide, sodium perborate, chlorine, bromine, iodine, sodium hypochlorite, sodium chlorite, sodium bromate or nitric acid.

6. Process according to one or more of Claims 3 to 5, characterized in that the oxidation is carried out with hydrogen peroxide.

7. Process according to one or more of Claims 3 to 6, characterized in that the oxidation is carried out in the presence of metal ions.

8. Use of the water-insoluble sulphur dyes of the general formula I of Claims 1 and/or 2 as infrared absorbers, as colorants or charge-control agents for electrophotographic toners, and for producing inks and recording fluids, in particular for ink-jet processes, and for the hot-melt printing process.

9. Recording fluid, in particular for the ink-jet printing process, containing a sulphur dye of the general formula I of Claims 1 and/or 2 in an organic solution.

10. Recording fluid according to Claim 9, characterized in that it contains 0.5 to 20 % by weight, preferably 0.5 to 15 % by weight, of a sulphur dye of the general formula I.

11. Recording fluid according to Claim 9 and/or 10, characterized in that it contains 99.5 to 80, preferably 99.5 to 85, % by weight of an organic solvent or solvent mixture.

## Revendications

1. Colorants au soufre insolubles dans l'eau de formule générale I 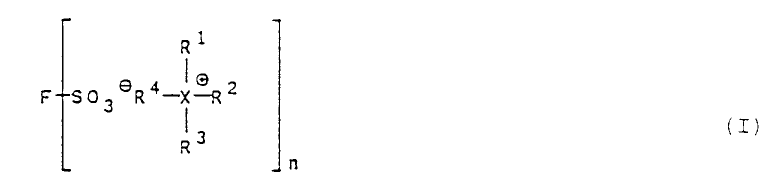 dans laquelle
F représente le chromophore du colorant C.I. Sulphur Black 1, Sulphur Black 2, Sulphur Black 5, Sulphur Black 6, Sulphur Black 7, Sulphur Black 10, Sulphur Black 11 ou Sulphur Black 12 ;
n va de 1 à 6 ;
X représente un atome d'azote ou de phosphore ;
R¹, R², R³ et R⁴, indépendamment les uns des autres, représentent un atome d'hydrogène, avec la limitation que tous ne sont pas simultanément l'hydrogène,
alkyle en C₁-C₃₀, alkoxyéthyle en C₁-C₁₄, alkoxypropyle en C₁-C₁₄,
oxéthyle de formule générale -(CH₂-CH₂-O)ₘR⁵,
R⁵ représentant un atome d'hydrogène ou alkyle en C₁-C₄ et m va de 1 à 5,
cycloalkyle en C₅-C₁₂,
phényle ou naphtyle éventuellement substitué une ou plusieurs fois par alkyle en C₁-C₁₄, alkoxy en C₁-C₁₄, alkoxycarbonyle en C₁-C₁₄ ou un atome d'halogène,
(aryle en C₆-C₁₂)-(alkyle en C₁-C₆), les restes alkyle cités pouvant être substitués encore par des groupes hydroxy, alkoxy en C₁-C₄ ou des groupes amino primaires, secondaires ou tertiaires et les restes R¹ et R² ensemble avec X pouvant former un système cyclique à 5 ou 6 chaînons éventuellement substitué ou contenant encore d'autres hétéroatomes.

2. Colorants au soufre insolubles dans l'eau selon la revendication 1, caractérisés en ce que F représente le chromophore du colorant de C.I. Sulphur Black 1 ou C.I. Sulphur Black 11.

3. Procédé de préparation de colorants au soufre insolubles dans l'eau des revendications 1 à 2, caractérisé en ce que l'on fait réagir des colorants au soufre de formule générale Il 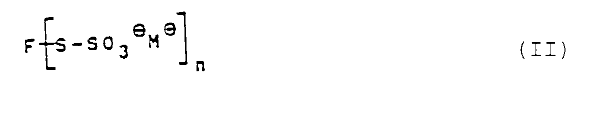 dans laquelle F et n ont les significations définies dans la revendication 1 et M^{⊕} représente un cation alcali, de préférence Na^{⊕}, avec un agent oxydant, pour obtenir des colorants de formule générale III 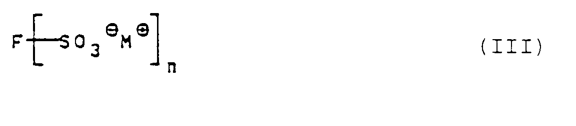 et on fait réagir ceux-ci avec un ou plusieurs sels de formule générale IV 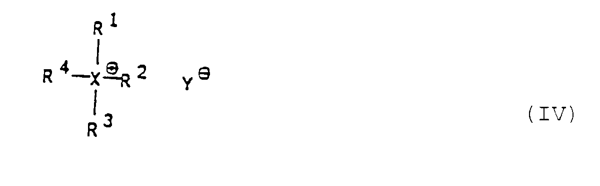 dans laquelle X et R¹ à R⁴ sont définis comme ci-dessus et Y^{^{⊖}} signifie l'anion d'un acide faible ou fort.

4. Procédé selon la revendication 3, caractérisé en ce que le colorant au soufre est oxydé sous sa forme de pigment ou leuco.

5. Procédé selon la revendication 3 et/ou 4, caractérisé en ce que l'on utilise comme agent oxydant le peroxyde d'hydrogène, le perborate de sodium, le chlore, le brome, l'iode, l'hypochlorite de sodium, le chlorite de sodium, le bromate de sodium ou l'acide nitrique.

6. Procédé selon une ou plusieurs des revendications 3 à 5, caractérisé en ce que l'on met en oeuvre l'oxydation avec du peroxyde d'hydrogène.

7. Procédé selon une ou plusieurs des revendications 3 à 6, caractérisé en ce que l'on met en oeuvre l'oxydation en présence d'ions métalliques.

8. Utilisation des colorants au soufre insolubles dans l'eau de formule générale I selon les revendications 1 et/ou 2, en tant qu'absorbeur d'infrarouges, en tant que colorant ou agent de contrôle de charge pour des toners électrophotographiques, ainsi que pour la préparation d'encres et de liquides d'enregistrement, en particuliers d'encres pour le procédé d'impression à jet d'encre ou "ink-jet", ainsi que pour le procédé d'impression hot-melt.

9. Liquide d'enregistrement, notamment pour le procédé d'impression à jet d'encre ou "ink-jet", contenant, dans un solvant organique, un colorant au soufre de formule générale I des revendications 1 et/ou 2.

10. Liquide d'enregistrement selon la revendication 9, caractérisé en ce qu'il contient de 0,5 à 20 % en poids, de préférence de 0,5 à 15 % en poids, d'un colorant au soufre de formule générale I.

11. Liquide d'enregistrement selon la revendication 9 et/ou 10, caractérisé en ce qu'il contient de 99,5 à 80, de préférence de 99,5 à 85 % en poids d'un solvant organique ou d'un mélange de solvants organiques.
